(19) Europäisches Patentamt / European Patent Office / Office européen des brevets

(11) **EP 2 551 942 B1**

(12) **FASCICULE DE BREVET EUROPEEN**

(45) Date de publication et mention de la délivrance du brevet:
**17.08.2016 Bulletin 2016/33**

(21) Numéro de dépôt: **12175342.0**

(22) Date de dépôt: **06.07.2012**

(51) Int Cl.:
*H01M 4/24* *(2006.01)*     *H01M 4/32* *(2006.01)*
*H01M 4/38* *(2006.01)*     *H01M 4/52* *(2006.01)*
*H01M 10/30* *(2006.01)*    *H01M 10/34* *(2006.01)*
*H01M 4/04* *(2006.01)*     *H01M 4/131* *(2010.01)*
*H01M 4/133* *(2010.01)*    *H01M 4/62* *(2006.01)*

(54) **Electrode pour accumulateur alcalin**

Elektrode für alkalischen Akkumulator

Electrode for alkaline storage battery

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2011 FR 1156956**

(43) Date de publication de la demande:
**30.01.2013 Bulletin 2013/05**

(73) Titulaire: **SAFT**
**93170 Bagnolet (FR)**

(72) Inventeurs:
• **Bernard, Patrick**
  **33000 BORDEAUX (FR)**
• **Goubault, Lionel**
  **33360 CARIGAN DE BORDEAUX (FR)**
• **Gillot, Stéphane**
  **33440 AMBARES (FR)**

(74) Mandataire: **Hirsch & Associés**
**137, rue de l'Université**
**75007 Paris (FR)**

(56) Documents cités:
EP-A1- 1 168 471     EP-A1- 1 942 547
JP-A- 2002 358 957   JP-A- 2004 031 292
US-A1- 2003 096 166

• A. LE VIET ET AL: "Nanostructured Nb 2 O 5 Polymorphs by Electrospinning for Rechargeable Lithium Batteries", JOURNAL OF PHYSICAL CHEMISTRY C, vol. 114, no. 1, 14 janvier 2010 (2010-01-14), pages 664-671, XP055019826, ISSN: 1932-7447, DOI: 10.1021/jp9088589

## Description

DOMAINE TECHNIQUE

Le domaine technique de l'invention est celui des accumulateurs alcalins, notamment celui des accumulateurs de type nickel-hydrure métallique (NiMH), nickel-cadmium (NiCd), nickel-zinc (NiZn), nickel-hydrogène (NiH$_2$) et nickel-fer (NiFe).

ETAT DE LA TECHNIQUE

Un accumulateur alcalin comprend généralement au moins une électrode positive (cathode) et au moins une électrode négative (anode). L'électrode positive est séparée de l'électrode négative par un séparateur qui est généralement constitué de polyoléfine ou de polyamide. Le faisceau électrochimique constitué par l'ensemble des électrodes positives et négatives et des séparateurs est imprégné d'un électrolyte qui est généralement une solution de base forte telle que NaOH, LiOH ou KOH.

Les électrodes positives non frittés (empâtées) au nickel utilisées dans les accumulateurs alcalins sont généralement constituées d'un substrat conducteur tridimensionnel tel que la mousse de nickel ou bidimensionnel de type feuillard, de particules d'hydroxyde de nickel sphériques et d'un composé de cobalt conducteur électronique, de type oxyde ou hydroxyde de cobalt introduit sous forme de poudre ou déposé à la surface des particules d'hydroxyde de nickel. Ces composés de cobalt conducteur permettent notamment d'assurer un bon contact électronique entre les particules d'hydroxyde de nickel peu conductrices à l'état déchargé et le substrat.

Un inconvénient de ces électrodes positives dans les accumulateurs alcalins est la formation de micros courts-circuits. Dans l'électrode positive au nickel, les composés du cobalt de type hydroxyde ou oxyde, dont le degré d'oxydation du cobalt est de 2.0 sont solubles dans l'électrolyte. Après une première charge complète de l'accumulateur, le composé de cobalt est oxydé à un degré d'oxydation supérieur ou égal à 3, généralement l'oxyhydroxyde de cobalt très peu soluble dans l'électrolyte est formé. En utilisation, lorsque la température de cyclage d'un accumulateur est élevée, l'oxyhydroxyde de cobalt peut se dissoudre et lorsque la tension de l'élément devient inférieure ou égale à 1V, l'oxyhydroxyde de cobalt peut se réduire en un composé de cobalt de type hydroxyde de cobalt soluble dans l'électrolyte. En conséquence, ce composé de cobalt conducteur peut migrer dans le séparateur et former des micros courts-circuits entre l'électrode positive et l'électrode négative. Lorsque le courant de court-circuit est suffisamment grand ou lorsque le courant de cyclage est suffisamment petit, ces micros court circuits engendrent une perte de capacité de l'accumulateur.

Un accumulateur NiMH fait partie de la famille des accumulateurs alcalins et comprend typiquement au moins une électrode positive comprenant une matière active principalement constituée d'hydroxyde à base de nickel, au moins une électrode négative principalement constituée d'un métal capable d'insérer réversiblement de l'hydrogène pour former un hydrure. Lors de l'utilisation en stockage, en cyclage ou en floating d'un accumulateur NiMH, l'alliage hydrurable présent dans l'électrode négative se corrode en milieu aqueux, pour former des oxydes ou hydroxydes, notamment des hydroxydes des métaux de transition Co, Mn ou A1 qui sont solubles dans l'électrolyte et qui peuvent donc migrer et se déposer dans le séparateur ou dans l'électrode positive. Déposé dans le séparateur, le composé à base de cobalt qui est conducteur, entraîne également la formation de micros courts-circuits qui contribuent à une perte supplémentaire de capacité de l'accumulateur.

Le document EP 1 942 547 décrit une batterie de type nickel-métal hydrurable dans laquelle la composition d'électrode positive comprend un hydroxyde à base de nickel, du cobalt, et des additifs, dont un composé à base de niobium, et dans laquelle la composition d'électrode négative comprend un alliage hydrurable et du cobalt.

Le document A. Le Viet et al. "Nanostuctured Nb2O5 Polymorphs by Electrospinning for Rechargeable Lithium Batteries", J. Phys. Chem. C 2010, 114, 664-671, décrit l'utilisation de formes polymorphes d'oxyde de niobium $Nb_2O_5$ dans des batteries Lithium-ion.

Le document EP-A-1 168 471 décrit une électrode positive pour accumulateur alcalin, dans lequel la composition pour l'électrode positive comprend un hydroxyde de nickel, de l'oxyde de cobalt contenant du sodium et un composé à base de niobium.

Le but de la présente invention est de réduire la perte de capacité en cyclage due à la formation de micros courts-circuits dans un accumulateur alcalin.

RESUME DE L'INVENTION

A cette fin, la présente invention propose une composition d'électrodes comprenant un matériau M choisi parmi un hydroxyde à base de nickel et un alliage hydrurable et de l'oxyde de niobium Nb$_2$O$_5$ de structure monoclinique.

Selon un mode de réalisation, la composition d'électrodes comprend de 0,1 à 3% en masse d'oxyde de niobium Nb$_2$O$_5$ de structure monoclinique, par rapport à la masse du matériau M, de préférence de 0,1 à 0,5% en masse d'oxyde

de niobium $Nb_2O_5$ de structure monoclinique.

Selon un mode de réalisation, la composition d'électrodes comprend en outre de l'oxyde de niobium $Nb_2O_5$ de structure orthorhombique dans une proportion telle que la masse d'oxyde de niobium $Nb_2O_5$ représente au plus 3% de la masse du matériau M.

Selon un mode de réalisation, la composition d'électrodes est telle que l'oxyde de niobium de structure monoclinique représente de 50 à 90% en masse de l'oxyde de niobium monoclinique et de l'oxyde de niobium orthorhombique.

Selon un mode de réalisation, la composition d'électrodes comprend de 0,1 à 2,9% en masse d'oxyde de niobium $Nb_2O_5$ de structure monoclinique et de 0,1 à 2,9% en masse d'oxyde de niobium $Nb_2O_5$ de structure ortho-rhombique par rapport à la masse du matériau M, de préférence de 0,1 à 0,5% en masse de chaque oxyde de niobium $Nb_2O_5$.

Selon un mode de réalisation, l'oxyde de niobium de la composition d'électrodes est constitué essentiellement d'oxyde de niobium de structure monoclinique ou d'oxyde de niobium de structure monoclinique et d'oxyde de niobium de structure orthorhombique.

Selon un mode de réalisation de l'invention, le matériau M pour électrode positive est un hydroxyde à base de nickel.

On entend par « hydroxyde à base de nickel » un hydroxyde de nickel, un hydroxyde contenant principalement du nickel, mais également un hydroxyde de nickel contenant au moins un hydroxyde syncristallisé d'un élément choisi parmi le zinc (Zn), le cadmium (Cd), le magnésium (Mg) et l'aluminium (Al), et au moins un hydroxyde syncristallisé d'un élément choisi parmi le cobalt (Co), le manganèse (Mn), l'aluminium (Al), l'yttrium (Y), le calcium (Ca), le zirconium (Zr), le cuivre (Cu). Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel. L'hydroxyde de nickel peut être de façon préférée recouvert par un revêtement à base d'hydroxyde de cobalt éventuellement partiellement oxydé.

Selon un mode de réalisation, la composition pour électrode positive comprend en outre au moins un épaississant tel que la carboxyméthylcellulose (CMC), l'hydroxyéthylcellulose (HEC), l'hydroxypropyl-méthylcellulose (HPMC), l'hydroxypropylcellulose (HPC), un poly(acide acrylique) (PAAc), une gomme Xanthane, une gomme Guar, le poly(oxyde d'éthylène) (PEO) ou un mélange de ceux-ci.

Selon un mode de réalisation, la composition pour électrode positive comprend en outre au moins un liant tel que un copolymère de styrène et de butadiène (SBR) éventuellement carboxylé, un copolymère d'acrylonitrile et de butadiène (NBR), un copolymère de styrène, d'éthylène, de butylène et de styrène (SEBS), un terpolymère de styrène, de butadiène et de vinylpyridine (SBVR), le polyamide (PA), un polyéthylène (PE), un copolymère de type éthylène-acétate de vinyle (EVA), un copolymère de Silane, un polymère à fonction acrylate de type polyacrylate, styrène-acrylate, styrène-maléique anhydride, un polytétrafluoroéthylène (PTFE), un copolymère fluoré d'éthylène et de propylène (FEP), le polyhexafluoropropylène (PHFP), et le perfluorométhylvinylether (PMVE), ou un mélange de ceux-ci.

Selon un mode de réalisation, la composition pour électrode positive comprend en outre au moins un composé choisi parmi les oxydes de cobalt et les hydroxydes de cobalt, tels que $CoO$, $Co(OH)_2$, $Li_xCoO_2$ (avec $0,1 \leq x \leq 1$), $Na_xCoO_2$ (avec $0,1 \leq x \leq 1$), $H_xCoO_2$ (avec $0,1 \leq x \leq 1$), $Co_xO_4$ (avec $2,5 \leq x \leq 3$).

Selon un mode de réalisation, la composition d'électrodes comprend en outre au moins un composé choisi parmi le nickel, le cobalt ou le carbone.

Selon un mode de réalisation, la composition pour électrode positive comprend en outre au moins un composé choisi parmi les oxydes et hydroxydes de zinc tels que $ZnO$ ou $Zn(OH)_2$, les oxydes et hydroxydes d'yttrium tels que $Y_2O_3$ ou $Y(OH)_3$, les oxydes et hydroxydes d'ytterbium tels que $Yb_2O_3$ ou $Yb(OH)_3$ et les oxydes, hydroxydes et dérivés fluorés de calcium tels que $CaO$, $Ca(OH)_2$ ou $CaF_2$ ou un mélange de ceux-ci.

Selon un mode de réalisation de l'invention, le matériau M pour électrode négative est un alliage hydrurable de formule ABx où :

A est un élément choisi parmi La, Ce, Nd, Pr, Mg, Sm, Y ou un mélange de ceux-ci,
B est un élément choisi parmi Ni, Mn, Fe, Al, Co, Cu, Zr, Sn ou un mélange de ceux-ci,
x est un nombre tel que $3 \leq x \leq 6$.

Selon un mode de réalisation, l'alliage est choisi dans le groupe comprenant les alliages du type $AB_5$, $A_5B_{19}$ et $A_2B_7$, ou un mélange de ceux-ci.

Selon un mode de réalisation, la composition pour électrode négative comprend en outre au moins un épaississant tel que la carboxyméthylcellulose (CMC), l'hydroxypropylméthylcellulose (HPMC), le poly(acide acrylique) (PAAc) et le poly(oxyde d'éthylène) (PEO) ou un mélange de ceux-ci.

Selon un mode de réalisation, la composition pour électrode négative comprend en outre au moins un liant tel que un copolymère de butadiène-styrène (SBR), le polystyrène acrylate (PSA) et le polytétrafluoroéthylène (PTFE), ou un mélange de ceux-ci.

Selon un mode de réalisation, la composition pour électrode négative comprend en outre au moins un composé choisi parmi le nickel sous forme de poudre, du carbone sous forme de poudre ou de fibres, des nanotubes de carbone.

Selon un mode de réalisation, la composition pour électrode positive et/ou négative comprend en outre des fibres d'au moins un polymère tel que le polyamide, le polypropylène, le polyéthylène ou un mélange de ceux-ci.

L'invention propose également une électrode positive comprenant la composition pour électrode positive précédemment décrite et un collecteur de courant.

L'invention propose également une électrode négative comprenant la composition pour électrode négative précédemment décrite et un collecteur de courant.

L'invention propose un accumulateur alcalin comprenant au moins une électrode positive selon l'invention.

L'invention propose également un accumulateur alcalin comprenant au moins une électrode négative selon l'invention.

Selon un mode de réalisation, l'accumulateur alcalin comprend au moins une électrode positive selon l'invention et au moins une électrode négative selon l'invention.

L'invention propose également un procédé de fabrication d'une électrode selon l'invention comprenant les étapes consistant à :

a) fournir un matériau M, le matériau M étant choisi parmi un hydroxyde à base de nickel, un alliage hydrurable ;

b) fournir un oxyde de niobium $Nb_2O_5$ de structure monoclinique ;

c) préparer un mélange aqueux comprenant le matériau M et l'oxyde de niobium de structure monoclinique pour obtenir une pâte ;

d) déposer la pâte obtenue à l'étape c) sur un collecteur de courant.

Selon un mode de réalisation, le procédé de fabrication permet d'obtenir l'électrode positive selon l'invention.

Selon un mode de réalisation, le procédé de fabrication permet d'obtenir l'électrode négative selon l'invention.

L'invention propose également un procédé d'amélioration de la durée de vie d'un accumulateur, comprenant une étape d'incorporation d'oxyde de niobium $Nb_2O_5$ de structure monoclinique à un matériau M, le matériau M étant choisi parmi un hydroxyde à base de nickel, un alliage hydrurable.

Les procédés de l'invention sont avantageusement mis en oeuvre suivant l'une ou plusieurs des variantes décrites ci-dessus et détaillées ci-dessous pour la fabrication de la composition d'électrodes.

Un avantage de l'invention est la limitation de la formation de micros courts-circuits dans les accumulateurs alcalins.

Un autre avantage de l'invention est d'améliorer la durée de vie des accumulateurs NiCd et NiMH qui sont destinés à des applications de type éclairage de secours (Emergency Lighting Unit (ELU)) pour lesquelles le régime de charge des accumulateurs est lent, typiquement à un courant de charge de l'ordre de Cn/20, où Cn est la capacité nominale de l'élement, et la température des accumulateurs est élevée, généralement supérieure à 40°C.

D'autres caractéristiques et avantages de l'invention apparaîtront à la lecture de la description qui suit d'un mode de réalisation préféré de l'invention, donnée à titre d'exemple.

BREVE DESCRIPTION DES FIGURES

La Figure 1 montre un diagramme de diffraction des rayons X d'une poudre d'oxyde de niobium $Nb_2O_5$ monoclinique.

La Figure 2 montre un diagramme de diffraction des rayons X d'une poudre d'oxyde de niobium $Nb_2O_5$ orthorhombique.

La Figure 3 montre un diagramme de diffraction des rayons X d'une électrode positive comprenant 0,5% d'oxyde de niobium $Nb_2O_5$ monoclinique.

La Figure 4 montre un diagramme de diffraction des rayons X d'une électrode positive comprenant 0,5% d'oxyde de niobium $Nb_2O_5$ orthorhombique.

EXPOSE DES MODES DE REALISATION DE L'INVENTION

Selon l'invention, la composition d'électrodes pour accumulateur alcalin comprend un matériau M, encore appelé matière active ou matière électrochimiquement active, et un oxyde de niobium pentavalent $Nb_2O_5$ de structure cristalline monoclinique.

L'oxyde de niobium monoclinique (nommé m-$Nb_2O_5$) peut être présent dans une proportion telle que sa masse soit comprise entre 0,1% et 3% de la masse de composé M, de préférence telle que sa masse représente de 0,1 à 0,5% de la masse de composé M.

L'oxyde de niobium pentavalent monoclinique peut être utilisé en association avec de l'oxyde de niobium pentavalent $Nb_2O_5$ de structure cristalline orthorhombique (nommé o-$Nb_2O_5$). Chaque oxyde de niobium représente de 0,1 à 2,9% de la masse de matériau M, de préférence de 0,1 à 0,5% de la masse totale de matériau M. Le matériau M peut comprendre au plus 3% d'oxyde de niobium $Nb_2O_5$ monoclinique et orthorhombique.

Selon un mode de réalisation de l'invention, la composition d'électrodes est telle que l'oxyde de niobium de structure monoclinique représente de 50 à 90% en masse de l'oxyde de niobium monoclinique et de l'oxyde de niobium orthorhombique.

Selon un mode de réalisation de l'invention, l'oxyde de niobium présent dans la composition est essentiellement constitué d'oxyde de niobium de structure monoclinique et d'oxyde de niobium de structure orthorhombique.

On a constaté de façon surprenante que l'incorporation d'oxyde de niobium $Nb_2O_5$ de structure monoclinique au matériau M permet de réduire les courts-circuits. L'oxyde de niobium de structure cristalline est obtenu commercialement, par exemple par le distributeur Acros Organics.

Les formes cristallines peuvent être détectées par analyse d'un diagramme de diffraction des rayons X. La forme cristalline de chaque oxyde de niobium a été caractérisée par diffraction des rayons X (DRX) à l'aide d'un diffrac-tomètre Bruker D5000 $\theta$-$2\theta$ (géométrie Bragg-Brentano, rayonnement Cu K$\alpha$, domaine angulaire en $2\theta$ = 5 à 90°, pas 0,03°). L'identification des phases a été réalisée par comparaison avec les fiches JCPDS (Joint Committee on Powder Diffraction Standards). Les références des fiches JCPDS sont 00-037-1468 pour l'oxyde de niobium monoclinique et 01-071-0336 pour l'oxyde de niobium orthorhombique.

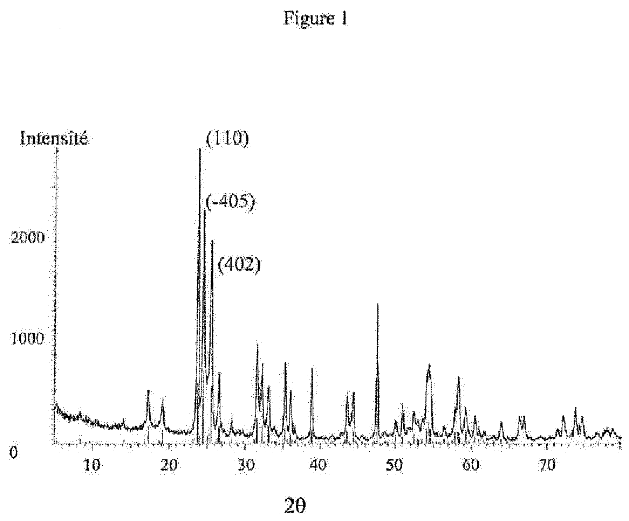

L'oxyde de niobium monoclinique appartenant au groupe d'espace P2(3) est défini par les paramètres de maille a, b, c et $\beta$ tels que a = 20,381 ; b = 3,82490 ; c = 19,3680, a/b = 5,32851 et $\beta$ = 115.69°. L'indice des plans hkl (110), (-405) et (402) est indiqué sur la Figure 1 pour les trois raies les plus intenses.

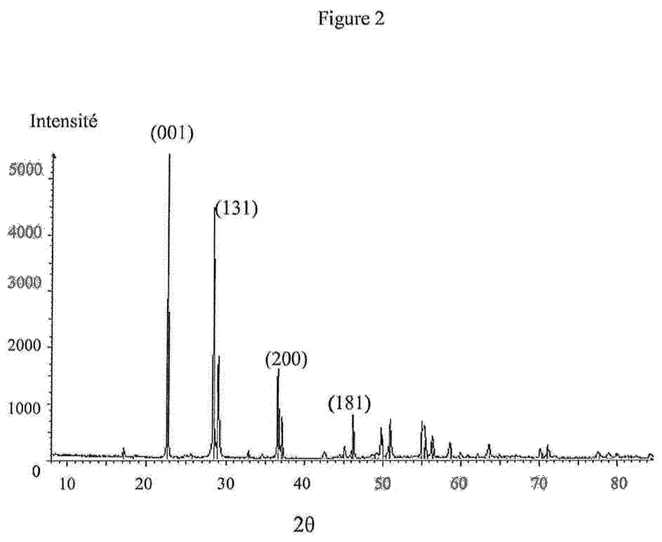

L'oxyde de niobium orthorhombique appartenant au groupe d'espace Pbam(55) est défini par les paramètres de maille a, b et c tels que a = 6,17500 ; b = 29,1750 ; c = 3,9300 et a/b = 0,21165. L'indice des plans hkl (001), (131), (200) et (181) est indiqué sur la Figure 2 pour les quatre raies les plus intenses.

L'oxyde de niobium monoclinique et l'oxyde de niobium orthorhombique se distinguent facilement par leurs raies les plus intenses du diagramme de diffraction des rayons X, d(110)= 3,74538Å, d(-405)=3,64245Å, d(402)=3,48895Å pour la forme monoclinique (Figure 1) et d(001)=3,93000Å, d(131)=3,14013Å, d(200)=3,08750Å, d(181)=2,45321Å pour la forme orthorhombique (Figure 2).

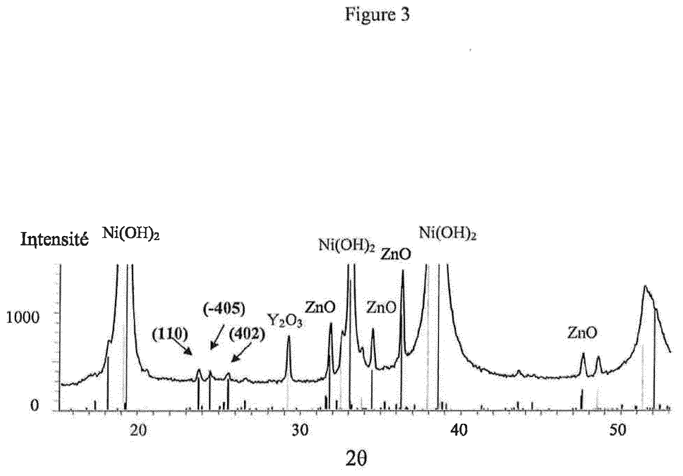

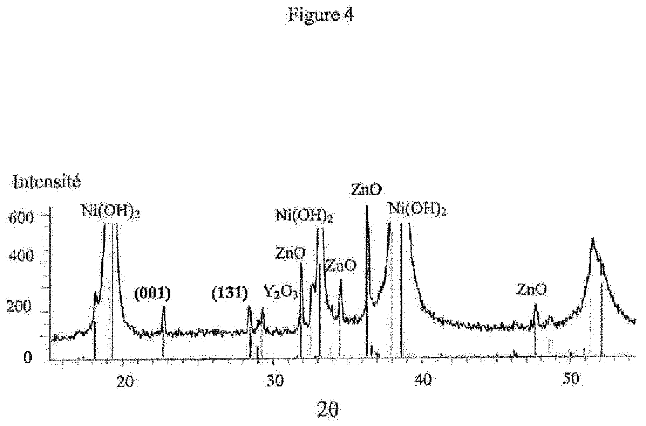

Au sein de la composition de matériau M d'électrodes, sa présence peut être détectée par diffraction des rayons X. Sur la Figure 3, l'oxyde de niobium monoclinique est identifiable grâce à la présence des plans (110), (-405) et (402). Sur la Figure 4, l'oxyde de niobium orthorhombique est identifiable grâce à la présence des plans (001) et (131).

L'invention concerne également une électrode positive comprenant ladite composition de matériau M.

Le matériau M pour électrode positive est un hydroxyde à base de nickel. On entend par « hydroxyde à base de nickel » un hydroxyde de nickel, un hydroxyde contenant principalement du nickel, mais également un hydroxyde de nickel contenant au moins un hydroxyde syncristallisé d'un élément choisi parmi le zinc (Zn), le cadmium (Cd), le magnésium (Mg) et l'aluminium (Al), et au moins un hydroxyde syncristallisé d'un élément choisi parmi le cobalt (Co), le manganèse (Mn), l'aluminium (Al), l'yttrium (Y), le calcium (Ca), le zirconium (Zr), le cuivre (Cu). Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel. L'hydroxyde de nickel peut être de façon préférée recouvert par un revêtement à base d'hydroxyde de cobalt éventuellement partiellement oxydé.

Avantageusement, la taille des particules de l'hydroxyde à base de nickel est caractérisée par un Dv 50% compris entre 5 et 15 μm.

La composition de matériau M pour électrode positive peut éventuellement comprendre un ou plusieurs additifs supplémentaires, destinés à faciliter la mise en oeuvre et les performances de l'électrode. Parmi les additifs, on peut citer, sans que cette liste soit exhaustive :

- des épaississants tels que la carboxyméthylcellulose (CMC), l'hydroxyéthylcellulose (HEC), l'hydroxypropyl-méthylcellulose (HPMC), l'hydroxypropylcellulose (HPC), un poly(acide acrylique) (PAAc), une gomme Xanthane, une gomme Guar, le poly(oxyde d'éthylène) (PEO),
- des liants tels que un copolymère de styrène et de butadiène (SBR) éventuellement carboxylé, un copolymère d'acrylonitrile et de butadiène (NBR), un copolymère de styrène, de butylène et de styrène (SEBS), un terpolymère de styrène, de butadiène et de vinylpyridine (SBVR), un polyamide (PA), un polyéthylène (PE), un copolymère de type éthylène-acétate de vinyle (EVA), un copolymère de silane, un polymère à fonction acrylate de type polyacrylate, styrène-acrylate, styrène-maléique anhydride, un polytérafluoroéthylène (PTFE), un copolymère fluoré d'éthylène et de propylène (FEP), le polyhexafluoropropylène (PPHF), et le perfluorométhylvinylether (PMVE),

- des fibres d'au moins un polymère, tel que le polyamide, le polypropylène, le polyéthylène, etc. pour améliorer les propriétés mécaniques de l'électrode,
- des agents conducteurs électroniques choisis par exemple parmi les oxydes et les hydroxydes de cobalt comme par exemple $CoO$, $Co(OH)_2$, $Li_xCoO_2$ ($0,1 \leq x \leq 1$), $Na_xCoO_2$ ($0,1 \leq x \leq 1$), $H_xCoO_2$ ($0,1 \leq x \leq 1$), $Co_xO_4$ ($2,5 \leq x \leq 3$), ou choisis parmi un composé de type nickel, cobalt ou carbone,
- d'autres composés choisis parmi les composés du zinc comme $ZnO$ ou $Zn(OH)_2$, de l'yttrium $Y_2O_3$, de l'ytterbium comme $Yb_2O_3$ ou $Yb(OH)_3$ et du calcium comme $CaO$, $Ca(OH)_2$ ou $CaF_2$. De préférence, ce composé est ajouté sous forme pulvérulente.

L'électrode positive est fabriquée en empâtant un collecteur de courant avec une pâte constituée d'un mélange aqueux de la composition de matériau M et d'additifs selon l'invention, puis en séchant le collecteur de courant contenant ladite pâte.

Le matériau M et les additifs selon l'invention sont ajoutés dans une dispersion d'eau à température ambiante pour obtenir une pâte. La pâte comprend typiquement :

- de 60 à 90% en masse de matériau M et d'oxyde de niobium $Nb_2O_5$ monoclinique et éventuellement d'oxyde de niobium $Nb_2O_5$ orthorhombique;
- de 0 à 5% en masse d'au moins un liant ;
- de 0 à 4% en masse d'au moins un épaississant ;
- de 0 à 30% en masse d'au moins un agent conducteur ;
- de 15 à 30% en masse d'eau.

Le séchage se fait selon les connaissances générales de l'homme du métier, par exemple sous air à 80°C durant 2h.

Le collecteur de courant peut être tridimensionnel, sous la forme d'une mousse ou d'un feutre, ou bidimensionnel, sous la forme d'un feuillard perforé ou non perforé, d'un métal déployé, d'une grille ou d'un tissu. Ce collecteur de courant peut être à base de métal ou de carbone. De préférence, le collecteur de courant est en nickel ou en acier nickelé.

L'épaisseur de l'électrode peut être comprise entre 0,2 et 2 mm.

L'invention propose également une électrode négative de type hydrure métallique comprenant ladite composition comprenant le matériau M.

Le matériau M pour électrode négative est un alliage hydrurable de formule $AB_x$ où :

A est un élément choisi parmi La, Ce, Nd, Pr, Mg, Sm, Y ou un mélange de ceux-ci,
B est un élément choisi parmi Ni, Mn, Fe, Al, Co, Cu, Zr, Sn ou un mélange de ceux-ci,
x est un nombre tel que $3 \leq x \leq 6$.

Avantageusement, la taille des particules d'alliage hydrurable est caractérisée par un $D_v$ 50% compris entre 20 et 200 $\mu$m, de préférence entre 30 et 100 $\mu$m.

De préférence, l'alliage est choisi dans le groupe comprenant les alliages du type ABs, $AsB_{19}$ et $A_2B_7$ ou un mélange de ceux-ci.

La composition de matériau M pour électrode négative peut éventuellement comprendre un ou plusieurs additifs supplémentaires, destinés à faciliter la mise en oeuvre et les performances de l'électrode. Parmi les additifs, on peut citer, sans que cette liste soit exhaustive :

- des épaississants tels que la carboxyméthylcellulose (CMC), l'hydroxypropylméthylcellulose (HPMC), le poly(acide acrylique) (PAAc), le poly(oxyde d'éthylène) (PEO),
- des liants tels que les copolymères de butadiène-styrène (SBR), le polystyrène acrylate (PSA), le polytétrafluoroéthylène (PTFE),
- des fibres d'au moins un polymère, tel que le polyamide, le polypropylène, le polyéthylène, etc., ces fibres permettant d'améliorer les propriétés mécaniques de l'électrode,
- des agents conducteurs tels que de la poudre de nickel, de la poudre ou des fibres de carbone, des nanotubes de carbone.

L'électrode négative est fabriquée en empâtant un collecteur de courant avec une pâte constituée d'un mélange aqueux de la composition de matériau M et d'additifs selon l'invention et en séchant le collecteur de courant contenant ladite pâte.

Le matériau M et les additifs selon l'invention sont ajoutés dans une dispersion d'eau à température ambiante pour obtenir une pâte. La pâte comprend typiquement :

- de 60 à 90% en masse de matériau M et d'oxyde de niobium $Nb_2O_5$ monoclinique et éventuellement d'oxyde de niobium $Nb_2O_5$ orthorhombique ;
- de 0 à 5% en masse d'au moins un liant ;
- de 0 à 4% en masse d'au moins un épaississant ;
- de 0 à 30% d'agent conducteur ;
- de 15 à 30% d'eau.

Le séchage se fait selon les connaissances générales de l'homme du métier, par exemple durant 2h à 80°C sous air.

Le collecteur de courant peut être une mousse de nickel, un feuillard perforé plan ou tridimensionnel en nickel ou en acier nickelé.

L'épaisseur de l'électrode peut être comprise entre 0,2 et 2 mm.

Avantageusement, l'électrode négative est recouverte d'une couche de surface destinée à améliorer la décharge à régime élevé et/ou la recombinaison de l'oxygène en fin de charge.

L'invention propose également un accumulateur à électrolyte alcalin comprenant au moins une électrode positive selon l'invention. Cet accumulateur comprend typiquement au moins une électrode positive selon l'invention, au moins une électrode négative, au moins un séparateur et un électrolyte alcalin.

L'électrode négative peut être à base de cadmium, de zinc, de fer, d'un alliage hydrurable ou d'hydrogène.

Le séparateur est généralement composé de fibres en polyoléfine (par exemple en polypropylène) ou polyamide, poreux non-tissé.

L'électrolyte est une solution aqueuse alcaline concentrée comprenant au moins un hydroxyde (KOH, NaOH, LiOH), en une concentration généralement de l'ordre de plusieurs fois la normalité.

De façon classique, on prépare les pâtes pour électrodes, on dépose les pâtes positives et négatives sur les collecteurs de courant respectifs pour former les électrodes positives et négatives, puis on superpose au moins une électrode positive, un séparateur et une électrode négative afin de constituer le faisceau électrochimique. On introduit le faisceau électrochimique dans un godet conteneur et on l'imprègne avec un électrolyte alcalin aqueux. On ferme ensuite l'accumulateur.

L'invention concerne tout format d'accumulateurs : format prismatique (électrodes planes) ou format cylindrique (électrodes spiralées ou concentriques). L'accumulateur selon l'invention peut être du type ouvert (ouvert ou semi-ouvert) ou du type étanche.

L'accumulateur alcalin peut être du type nickel-hydrure métallique, nickel-cadmium, nickel-fer, nickel-zinc ou nickel-hydrogène.

L'invention concerne également un accumulateur de type nickel-hydrure métallique comprenant au moins une électrode négative selon l'invention.

Selon un mode de réalisation, l'accumulateur alcalin de type nickel-hydrure métallique comprend au moins une électrode négative selon l'invention et au moins une électrode positive selon l'invention.

EXEMPLES

Des accumulateurs étanches NiCd de format standardisé AA de capacité nominale, Cn, 800mAh ont été réalisés.

Les électrodes positives ont été réalisées comme suit : une pâte constituée à partir d'un mélange aqueux d'hydroxyde de nickel, d'oxyde de niobium $Nb_2O_5$ monoclinique et/ou orthorhombique, de CMC (épaississant), d'une dispersion aqueuse de PTFE contenant 40% d'eau (liant), d'hydroxyde de cobalt (conducteur), d'oxyde d'yttrium et d'oxyde de zinc est empâtée dans une mousse de nickel de porosité d'environ 95%. Le matériau M pulvérulent est constitué d'un hydroxyde à base de nickel. L'oxyde de niobium $Nb_2O_5$ monoclinique et/ou orthorhombique (du fournisseur Acros Organics) est ajouté sous forme de poudre à la dispersion servant à la préparation de la pâte. Les proportions de chacun des oxydes de niobium par rapport à la masse de matériau M dans l'électrode positive sont notées dans le tableau 1. Les proportions de chacun des matériaux dans la pâte aqueuse sont les suivantes :

$$Ni(OH)_2 + \text{Oxydes de niobium} : 67\%$$

$Co(OH)_2$ : 6%
ZnO: 2%

$Y_2O_3$ : 0,4%
CMC : 0,4%
Dispersion de PTFE : 1,2%

Une fois la pâte déposée sur le collecteur de courant, l'ensemble est séché sous air à 80°C durant 2 heures afin d'en éliminer l'eau, laminé puis découpé pour obtenir l'électrode aux dimensions désirées. Toutes les électrodes positives sont découpées aux mêmes dimensions.

Les électrodes négatives ont été réalisées comme suit : Une pâte constituée d'un mélange aqueux de poudre de CdO, d'HPMC (épaississant), de SBR (liant), est empâtée dans une mousse de nickel. Toutes les électrodes négatives sont découpées aux mêmes dimensions.

Le faisceau constitué de l'électrode positive, du séparateur et de l'électrode négative, est spiralé et introduit dans le godet. Les éléments de connexion sont ensuite montés. Le godet est rempli d'électrolyte 8,5N ternaire composé de KOH, NaOH et LiOH.

Ces accumulateurs de format AA subissent tout d'abord 1 cycle (charge 3h à 20mA, charge 3h à 264mA, décharge 160mA à la tension d'arrêt de 1,0V) puis 2 cycles (charge 16h à 80mA, repos 1h, décharge 160mA à la tension d'arrêt de 1,0V). La capacité des accumulateurs au cycle 3, exprimée en mAh et en pourcentage de la capacité nominale, est notée dans le tableau 1. Ces accumulateurs de format AA subissent ensuite un cyclage prolongé à 40 °C constitué d'une charge de 24h à 40mA, d'une décharge à 160mA à la tension d'arrêt de 1,0V. Le cyclage est arrêté lorsque la capacité de l'accumulateur devient inférieure ou égale à 75% de la capacité nominale. Le nombre de cycles nécessaires pour obtenir une capacité inférieure ou égale à 75% de la capacité nominale est indiqué dans le tableau 1.

Les accumulateurs 'b', 'c', 'd' et 'f' sont des exemples d'accumulateurs selon l'invention et les accumulateurs 'a' et 'e' sont des exemples comparatifs qui ne font pas partie de l'invention.

Tableau 1 : Tableau regroupant les résultats obtenus

| Accumulateur | a | b | c | d | e | f |
|---|---|---|---|---|---|---|
| Masse m-$Nb_2O_5$/masse matériau M (%) | 0 | 0,25 | 0,5 | 4 | 0 | 0,25 |
| Masse o-$Nb_2O_5$/masse matériau M(%) | 0 | 0 | 0 | 0 | 0,25 | 0,25 |
| Capacité au cycle 3 (mAh) | 803 | 800 | 794 | 755 | 800 | 794 |
| Capacité au cycle 3 (%Cn) | 100 | 100 | 99 | 94 | 100 | 99 |
| Nombre de cycles pour obtenir C<0,75Cn | 41 | 108 | 151 | 125 | 52 | 164 |

L'examen du tableau 1 montre que la capacité en cyclage à 40°C des accumulateurs 'a' et 'e' qui ne contiennent pas d'oxyde de niobium $Nb_2O_5$ monoclinique devient inférieure à 75% de la capacité nominale après seulement 41 cycles (accumulateur 'a') ou 52 cycles (accumulateur 'e').

Les capacités initiales des accumulateurs 'b', 'c', 'e', 'f' sont comprises entre 99 et 100% de la capacité nominale tandis que l'accumulateur 'd' pour lequel la masse d'oxyde de niobium monoclinique est égale à 4% présente une capacité réduite de 755 mAh soit 94% de la capacité nominale à l'état initial.

Les accumulateurs 'b', 'c', 'd' dont l'électrode positive contient de l'oxyde de niobium $Nb_2O_5$ monoclinique conservent une capacité en cyclage à 40°C supérieure à 75% de la capacité nominale pendant plus de 108 cycles, soit un gain en nombre de cycles supérieur à 100% par rapport aux accumulateurs qui ne contiennent pas d'oxyde de niobium monoclinique. D'autre part, l'accumulateur 'f dont l'électrode positive contient un mélange d'oxyde de niobium $Nb_2O_5$ monoclinique et d'oxyde de niobium orthorhombique conserve une capacité en cyclage à 40°C supérieure à 75% de la capacité nominale pendant 164 cycles.

On constate qu'à teneur égale en oxyde de niobium pentavalent, l'ajout dans l'électrode positive d'un mélange d'oxydes de niobium orthorhombique et monoclinique est plus efficace que l'ajout d'oxyde de niobium uniquement de structure monoclinique.

Par ailleurs, l'ajout dans l'électrode positive d'un oxyde de niobium orthorhombique (accumulateur 'e') est moins efficace que l'ajout d'un oxyde de niobium monoclinique (accumulateur 'b').

Ainsi, les accumulateurs 'b', 'c' et 'f suivant l'invention présentent une capacité initiale supérieure ou égale à 99% de la capacité nominale et conservent une capacité supérieure à 75% de la capacité nominale pendant plus de 108 cycles à 40°C (charge 24h à 40mA, décharge à 160mA à la tension d'arrêt de 1V) contrairement aux accumulateurs 'a' et 'e' dont la composition comprenant le matériau M de l'électrode positive est hors de l'invention.

**Revendications**

1. Composition d'électrodes comprenant :

   a) Un matériau M choisi parmi un hydroxyde à base de nickel, un alliage hydrurable ;
   b) De l'oxyde de niobium $Nb_2O_5$ ;

   **caractérisée en ce que** l'oxyde de niobium est de structure monoclinique.

2. Composition d'électrodes selon la revendication 1, comprenant de 0,1 à 3% en masse d'oxyde de niobium $Nb_2O_5$ de structure monoclinique par rapport à la masse du matériau M, de préférence de 0,1 à 0,5% en masse.

3. Composition d'électrodes selon la revendication 1 ou 2, comprenant en outre de l'oxyde de niobium $Nb_2O_5$ de structure orthorhombique dans une proportion telle que la masse d'oxyde de niobium $Nb_2O_5$ représente au plus 3% de la masse du matériau M.

4. Composition d'électrodes selon la revendication 3, dans laquelle l'oxyde de niobium de structure monoclinique $Nb_2O_5$ représente de 50% à 90% en masse de l'oxyde de niobium de structure monoclinique et de l'oxyde de niobium de structure orthorhombique.

5. Composition d'électrodes selon l'une des revendications 1 à 4, comprenant de 0,1 à 2,9% en masse d'oxyde de niobium $Nb_2O_5$ de structure monoclinique et de 0,1 à 2,9% en masse d'oxyde de niobium $Nb_2O_5$ de structure orthorhombique, de préférence de 0,1 à 0,5% en masse de chaque oxyde de niobium $Nb_2O_5$.

6. Composition d'électrodes selon l'une des revendications 1 à 5, comprenant en outre des fibres d'au moins un polymère tel que le polyamide, le polypropylène, le polyéthylène ou un mélange de ceux-ci.

7. Composition d'électrodes selon l'une des revendications 1 à 6, dans laquelle le matériau M est un hydroxyde à base de nickel.

8. Composition d'électrodes selon la revendication 7, comprenant en outre au moins un épaississant tel que la carboxyméthylcellulose (CMC), l'hydroxyéthylcellulose (HEC), l'hydroxypropyl-méthylcellulose (HPMC), l'hydroxypropylcellulose (HPC), un poly(acide acrylique) (PAAc), une gomme Xanthane, une gomme Guar, le poly(oxyde d'éthylène) (PEO) ou un mélange de ceux-ci.

9. Composition d'électrodes selon la revendication 7 ou 8, comprenant en outre au moins un liant tel qu'un copolymère de styrène et de butadiène (SBR) éventuellement carboxylé, un copolymère d'acrylonitrile et de butadiène (NBR), un copolymère de styrène, d'éthylène, de butylène et de styrène (SEBS), un terpolymère de styrène, de butadiène et de vinylpyridine (SBVR), un polyamide (PA), un polyéthylène (PE), un copolymère de type éthylène-acétate de vinyle (EVA), un copolymère de silane, un polymère à fonction acrylate de type polyacrylate, styrène-acrylate, styrène-maléique anhydride, un polytétrafluoroéthylène (PTFE), un copolymère fluoré d'éthylène et de propylène (FEP), le polyhexafluoropropylène (PHFP), et le perfluorométhylvinylether (PMVE) ou un mélange de ceux-ci.

10. Composition d'électrodes selon l'une des revendications 7 à 9, comprenant en outre au moins un composé choisi parmi :

    - le nickel, le cobalt, le carbone, les oxydes de cobalt et les hydroxydes de cobalt, tels que CoO, $Co(OH)_2$, $Li_xCoO_2$ avec $0,1 \leq x \leq 1$, $Na_xCoO_2$ avec $0,1 \leq x \leq 1$, $H_xCoO_2$ avec $0,1 \leq x \leq 1$, $Co_xO_4$ avec $2,5 \leq x \leq 3$,
    - les oxydes et hydroxydes de zinc tels que ZnO ou $Zn(OH)_2$, les oxydes et hydroxydes d'yttrium tels que $Y_2O_3$ ou $Y(OH)_3$, les oxydes et hydroxydes d'ytterbium tels que $Yb_2O_3$ ou $Yb(OH)_3$, et les oxydes, hydroxydes et dérivés fluorés de calcium tels que CaO, $Ca(OH)_2$ ou $CaF_2$ ou un mélange de ceux-ci.

11. Composition d'électrodes selon l'une des revendications 1 à 5, dans laquelle le matériau M est un alliage hydrurable de formule $AB_x$ où :

    A est un élément choisi parmi La, Ce, Nd, Pr, Mg, Sm, Y ou un mélange de ceux-ci,
    B est un élément choisi parmi Ni, Mn, Fe, Al, Co, Cu, Zr, Sn ou un mélange de ceux-ci,
    x est un nombre tel que $3 \leq x \leq 6$.

**12.** Electrode positive comprenant :

a) la composition selon l'une des revendications 7 à 10 ;
b) un collecteur de courant.

**13.** Electrode négative comprenant :

a) la composition selon la revendication 11 ;
b) un collecteur de courant.

**14.** Accumulateur alcalin comprenant au moins une électrode selon la revendication 12 ou 13.

**15.** Accumulateur alcalin selon la revendication 14, dans lequel au moins une électrode positive est selon la revendication 12 et au moins une électrode négative est selon la revendication 13.

**16.** Procédé de fabrication d'une électrode selon la revendication 12 ou 13 comprenant les étapes consistant à :

a) fournir un matériau M, le matériau M étant choisi parmi un hydroxyde à base de nickel, un alliage hydrurable ;
b) fournir un oxyde de niobium $Nb_2O_5$ de structure monoclinique ;
c) préparer un mélange aqueux comprenant le matériau M et l'oxyde de niobium de structure monoclinique pour obtenir une pâte ;
d) déposer la pâte obtenue à l'étape c) sur un collecteur de courant.


**Patentansprüche**

**1.** Elektrodenzusammensetzung, umfassend:

a) Ein Material M, ausgewählt aus einem Hydroxid auf Nickelbasis, einer wasserstoffbindenden Legierung;
b) Nioboxid $Nb_2O_5$;

**dadurch gekennzeichnet, dass** das Nioboxid eine monokline Struktur aufweist.

**2.** Elektrodenzusammensetzung nach Anspruch 1, umfassend 0,1 bis 3 Masse-%, bevorzugt 0,1 bis 0,5 Masse-% Nioboxid $Nb_2O_5$ mit monokliner Struktur, bezogen auf die Masse des Materials M.

**3.** Elektrodenzusammensetzung nach Anspruch 1 oder 2, ferner umfassend Nioboxid $Nb_2O_5$ mit orthorhombischer Struktur in einem derartigen Anteil, dass die Masse an Nioboxid $Nb_2O_5$ höchstens 3 Masse-% des Materials M ausmacht.

**4.** Elektrodenzusammensetzung nach Anspruch 3, wobei das Nioboxid mit monokliner Struktur $Nb_2O_5$ 50 Masse-% bis 90 Masse-% des Nioboxids mit monokliner Struktur und des Nioboxids mit orthorhombischer Struktur ausmacht.

**5.** Elektrodenzusammensetzung nach einem der Ansprüche 1 bis 4, umfassend 0,1 bis 2,9 Masse-% Nioboxid $Nb_2O_5$ mit monokliner Struktur und 0,1 bis 2,9 Masse-% Nioboxid $Nb_2O_5$ mit orthorhombischer Struktur, bevorzugt 0,1 bis 0,5 Masse-% jedes Nioboxids $Nb_2O_5$.

**6.** Elektrodenzusammensetzung nach einem der Ansprüche 1 bis 5, ferner umfassend Fasern aus mindestens einem Polymer, wie beispielsweise Polyamid, Polypropylen, Polyethylen oder einem Gemisch daraus.

**7.** Elektrodenzusammensetzung nach einem der Ansprüche 1 bis 6, wobei es sich bei dem Material M um ein Hydroxid auf Nickelbasis handelt.

**8.** Elektrodenzusammensetzung nach Anspruch 7, ferner umfassend mindestens ein Verdickungsmittel, wie beispielsweise Carboxymethylcellulose (CMC), Hydroxyethylcellulose (HEC), Hydroxypropylmethylcellulose (HPMC), Hydroxypropylcellulose (HPC), eine Polyacrylsäure (PAAc), ein Xanthangummi, ein Guargummi, Polyethylenoxid (PEO) oder ein Gemisch daraus.

9. Elektrodenzusammensetzung nach Anspruch 7 oder 8, ferner umfassend mindestens ein Bindemittel, wie beispielsweise ein gegebenenfalls carboxyliertes Styrolbutadien-Copolymer (SBR), ein Acrylnitril-Butadien-Copolymer (NBR), eine Styrol-Ethylen-Butylen-Styrol-Copolymer (SEBS), eine Styrol-Butadien-Vinylpyridin-Terpolymer (SBVR), ein Polyamid (PA), ein Polyethylen (PE), ein Copolymer vom Typ Vinylethylenacetat (EVA), ein Silan-Copolymer, ein Polymer mit Acrylatfunktion vom Typ Polyacrylat, Styrolacrylat, Styrol-Maleinsäureanhydrid, ein Polytetrafluorethylen (PTFE), Fluorethylen-Propylen-Copolymer (FEP), Polyhexafluorpropylen (PHFP) und Perfluormethylvinylether (PMVE) oder ein Gemisch daraus.

10. Elektrodenzusammensetzung nach einem der Ansprüche 7 bis 9, ferner umfassend mindestens eine Verbindung, ausgewählt aus:

- Nickel, Cobalt, Kohlenstoff, Cobaltoxiden und Cobalthydroxiden, wie beispielsweise $CoO$, $Co(OH)_2$, $Li_xCoO_2$ mit $0,1 \leq x \leq 1$, $Na_xCoO_2$ mit $0,1 \leq x \leq 1$, $H_xCoO_2$ mit $0,1 \leq x \leq 1$, $Co_xO_4$ mit $2,5 \leq x \leq 3$,
- Zinkoxiden und -hydroxiden, wie beispielsweise $ZnO$ oder $Zn(OH)_2$, Yttriumoxiden und -hydroxiden, wie beispielsweise $Y_2O_3$ oder $Y(OH)_3$, Ytterbiumoxiden und - hydroxiden, wie beispielsweise $Yb_2O_3$ oder $Yb(OH)_3$, und Calciumoxiden, - hydroxiden und -fluorderivaten, wie beispielsweise $CaO$, $Ca(OH)_2$ oder $CaF_2$ oder ein Gemisch daraus.

11. Elektrodenzusammensetzung nach einem der Ansprüche 1 bis 5, wobei es sich bei dem Material M um eine wasserstoffbindende Legierung mit der Formel $AB_x$ handelt, worin:

- A ein Element ist, ausgewählt aus La, Ce, Nd, Pr, Mg, Sm, Y oder einem Gemisch daraus,
- B ein Element ist, ausgewählt aus Ni, Mn, Fe, Al, Co, Cu, Zr, Sn oder einem Gemisch daraus,

x eine Anzahl wie beispielsweise $3 \leq x \leq 6$ ist.

12. Positive Elektrode, umfassend:

a) die Zusammensetzung nach einem der Ansprüche 7 bis 10;
b) einen Stromabnehmer.

13. Negative Elektrode, umfassend:

a) die Zusammensetzung nach Anspruch 11;
b) einen Stromabnehmer.

14. Alkalischer Akkumulator, umfassend mindestens eine Elektrode nach Anspruch 12 oder 13.

15. Alkalischer Akkumulator nach Anspruch 14, wobei mindestens eine positive Elektrode nach Anspruch 12 ist und mindestens eine negative Elektrode nach Anspruch 13 ist.

16. Verfahren zur Herstellung einer Elektrode nach Anspruch 12 oder 13, das die folgenden Schritte umfasst:

a) Bereitstellen eines Materials M, ausgewählt aus einem Hydroxid auf Nickelbasis, einer wasserstoffbindenden Legierung;
b) Bereitstellen eines Nioboxids $Nb_2O_5$ mit monokliner Struktur;
c) Herstellen eines wässrigen Gemischs, umfassend das Material M und Nioboxid mit monokliner Struktur, um eine Paste zu erhalten;
d) Ablagern der in Schritt c) erhaltenen Paste auf einem Stromabnehmer.

**Claims**

1. A composition for electrodes comprising:

a) a material M selected from a nickel-based hydroxide, a hydridable alloy;
b) niobium oxide $Nb_2O_5$;

**characterized in that** the niobium oxide has a monoclinic structure.

2. The composition for electrodes according to claim 1, comprising from 0.1 to 3% by mass of niobium oxide $Nb_2O_5$ with a monoclinic structure, based on the mass of the material M, preferably from 0.1 to 0.5% by mass.

3. The composition for electrodes according to claim 1 or 2, further comprising niobium oxide $Nb_2O_5$ with an orthorhombic structure in a proportion such that the mass of niobium oxide $Nb_2O_5$ accounts for at most 3% of the mass of the material M.

4. The composition for electrodes according to claim 3, wherein the niobium oxide $Nb_2O_5$ with a monoclinic structure accounts for 50% to 90% by mass of the niobium oxide with monoclinic structure and of the niobium oxide with orthorhombic structure.

5. The composition for electrodes according to one of claims 1 to 4, comprising from 0.1 to 2.9% by mass of niobium oxide $Nb_2O_5$ with monoclinic structure and from 0.1 to 2.9% by mass of niobium oxide $Nb_2O_5$ with orthorhombic structure, preferably from 0.1 to 0.5% mass of each niobium oxide $Nb_2O_5$.

6. The composition for electrodes according to one of claims 1 to 5, further comprising fibers of at least one polymer such as polyamide, polypropylene, polyethylene or a mixture thereof.

7. The composition for electrodes according to one of claims 1 to 6, wherein the material M is a nickel-based hydroxide.

8. The composition for electrodes according to claim 7, further comprising at least one thickener such as carboxymethylcellulose (CMC), hydroxyethylcellulose (HEC), hydroxypropyl-methylcellulose (HPMC), hydroxypropylcellulose (HPC), poly(acrylic acid) (PAAc), xanthan gum, guar gum, poly(ethylene oxide) (PEO) or a mixture thereof.

9. The composition for electrodes according to claim 7 or 8, further comprising at least one binder such as a copolymer of styrene and of butadiene (SBR), optionally carboxylated, a copolymer of acrylonitrile and of butadiene (NBR), a copolymer of styrene, ethylene, butylene and styrene (SEBS), a terpolymer of styrene, butadiene and vinyl pyridine (SBVR), polyamide (PA), polyethylene (PE), a copolymer of the ethylene-vinyl acetate type (EVA), a copolymer of silane, a polymer with an acrylate function of the polyacrylate, styrene-acrylate, styrene-maleic anhydride type, polytetrafluoroethylene (PTFE), a fluorinated copolymer of ethylene and of propylene (FEP), polyhexafluoropropylene (PHFP), and perfluoromethylvinylether (PMVE) or a mixture thereof.

10. The composition for electrodes according to one of claims 7 to 9, further comprising at least one compound selected from:

    - nickel, cobalt, carbon, cobalt oxides and cobalt hydroxides such as $CoO$, $Co(OH)_2$, $Li_xCoO_2$ with $0.1 \leq x \leq 1$, $Na_xCoO_2$ with $0.1 \leq x \leq 1$, $H_xCoO_2$ with $0.1 \leq x \leq 1$, $Co_xO_4$ with $2.5 \leq x \leq 3$,
    - zinc oxide and hydroxides such as $ZnO$ or $Zn(OH)_2$, yttrium oxides and hydroxides such as $Y_2O_3$ or $Y(OH)_3$, ytterbium oxides and hydroxides such as $Yb_2O_3$ or $Yb(OH)_3$, and calcium oxides, hydroxides and fluorinated derivatives of calcium, such as $CaO$, $Ca(OH)_2$ or $CaF_2$ or a mixture thereof.

11. The composition for electrodes according to one of claims 1 to 5, wherein the material M is a hydridable alloy of formula $AB_x$ wherein:

    A is an element selected from La, Ce, Nd, Pr, Mg, Sm, Y or a mixture thereof,
    B is an element selected from Ni, Mn, Fe, Al, Co, Cu, Zr, Sn or a mixture thereof,
    x is a number such that $3 \leq x \leq 6$.

12. A positive electrode comprising:

    a) the composition according to one of claims 7 to 10;
    b) a current collector.

13. A negative electrode comprising:

    a) the composition according to claim 11;

b) a current collector.

14. An alkaline secondary cell comprising at least one electrode according to claim 12 or 13.

15. The alkaline secondary cell according to claim 14, wherein at least one positive electrode is according to claim 12 and at least one negative electrode is according to claim 13.

16. A method for manufacturing an electrode according to claim 12 or 13 comprising the steps of:

   a) providing a material M, the material M being selected from a nickel-based hydroxide, a hydridable alloy;
   b) providing a niobium oxide $Nb_2O_5$ with a monoclinic structure;
   c) preparing an aqueous mixture comprising the material M and the niobium oxide with monoclinic structure in order to obtain a slurry;
   d) depositing the slurry obtained in step c) on a current collector.

Figure 1

Figure 2

Figure 3

Figure 4

**EP 2 551 942 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1942547 A

- EP 1168471 A

**Littérature non-brevet citée dans la description**

- **LE VIET et al.** Nanostuctured Nb2O5 Polymorphs by Electrospinning for Rechargeable Lithium Batteries. *J. Phys. Chem. C,* 2010, vol. 114, 664-671